# EUROPEAN PATENT APPLICATION

(11) **EP 2 071 850 A1**
(43) Date of publication of application: **17.06.2009**
(21) Application number: 07291476.5
(22) Date of filing: 10.12.2007
(51) Int. Cl.: H04N 7/24, H04L 29/06

(54) **Intelligent wrapping of video content to lighten downstream processing of video streams**

(71) Applicant: Alcatel Lucent, 75008 Paris (FR)
(72) Inventor: Robinson, Dave Cecil, SN8 2NP Wiltshire (GB); Villegas Nunez, Alvaro, 28033 Madrid (ES)
(74) Representative: MERH-IP Matias Erny Reichl Hoffmann

(57) **Abstract**

IPTV systems frequently require re-processing in order to implement services such as Fast Channel Change, Video Denting or Advertisement Insertion. These re-processing steps are relatively complex and require significant network investments. The present invention proposes a so called intelligent wrapper that generates encapsulated video streams, which can easily be reprocessed, thus simplifying the implementation of applications as the ones mentioned above. For this, the intelligent wrapper encapsulates packets from at least one data stream into transmission packets, wherein the packets are associated with a plurality of packet types. The disclosed method comprises the steps of receiving packets from the at least one data stream; of sorting the packets according to their packet type; and of encapsulating the packets into transmission packets such that each transmission packet only contains packets from a subset of the plurality of packet types.

## Description

The present invention relates to an intelligent packet wrapping method and apparatus for the usage in IPTV systems.

In IPTV (Internet Protocol Television) systems digital television services are delivered by using the Internet Protocol over a network infrastructure. A general definition of IPTV is television content that, instead of being delivered through traditional broadcast and cable formats, is received by the viewer through technologies used for computer networks.

Because IPTV uses standard networking protocols, it promises lower costs for operators and lower prices for end-users. Using set-top boxes (STBs) with broadband Internet connections, video can be streamed to households, possibly more efficiently than current coaxial cable. Internet Service Providers (ISPs) are upgrading their networks to bring higher speeds and to allow multiple High Definition TV channels.

IPTV covers both live TV (multicasting) as well as stored video (Video on Demand - VOD). The playback of IPTV requires either a personal computer or a set-top box connected to a TV. Video content is typically compressed using either a MPEG-2 or a MPEG-4 codec and then sent in an MPEG Transport Stream delivered via IP Multicast in case of live TV or via IP Unicast in case of Video on Demand. IP Multicast is a method in which information can be sent to multiple receivers at the same time. Due to its improved performance, the newly released (MPEG-4) H.264 codec is increasingly used to replace the older MPEG-2 codec, but also other codecs as ,e.g., VC-1 are frequently used. By way of example, the present invention is explained on the basis of MPEG-2, which will be briefly discussed in the following. The invention is however not limited to MPEG-2 and may be applied for other codecs as well.

MPEG-2 is a standard for the generic coding of moving pictures and associated audio information. It describes a combination of lossy video compression and lossy audio compression methods which permit storage and transmission of movies using currently available storage media and transmission bandwidth. MPEG-2 is widely used as the format of digital television signals that are broadcast by terrestrial (over-the-air), cable, and direct broadcast satellite TV systems. It also specifies the format of movies and other programs that are distributed on DVD and similar media.

The MPEG-2 standard is sub-divided into multiple parts, each one describing a different aspect of the codec. Part 2 describes the applied video encoding method and will be outlined briefly in the following, in order to make apparent the elementary data structure of MPEG-2 data streams. Part 1 of the MPEG-2 standard is the system section, where two distinct transmission formats for MPEG-2 data streams are described: the Transport Stream and the Program Stream. The present invention relates to MPEG-2 Transport Streams which will be described in detail. The other parts, e.g. part 3 which describes the applied audio encoding methods, will not be outlined in the present description, but can be taken from the standard documentation if necessary for implementation aspects.

MPEG-2 specifies that raw data frames be compressed into three kinds of frames: intra-coded frames (I-frames), predictive-coded frames (P-frames), and bidirectionally-predictive-coded frames (B-frames). An I-frame is a compressed version of a single uncompressed (raw) frame. It takes advantage of spatial redundancy and of the inability of the eye to detect certain variations in the image. Unlike P-frames and B-frames, 1-frames do not depend on data in the preceding or the following frames. Typically, every 15th frame (i.e. every 0.5 seconds) is made into an I-frame. P-frames and B-frames might follow an 1-frame like this, IBBPBBPBBPBB(I), to form a Group Of Pictures (GOP); however, the standard is flexible about this.

P-frames provide more compression than I-frames because they take advantage of the data in the previous I-frame or P-frame. I-frames and P-frames are called reference frames, as they can be referenced to by other frames. The processing of B-frames is similar to that of P-frames except that B-frames use the picture in the following reference frame as well as the picture in the preceding reference frame. As a result, B-frames usually provide more compression than P-frames.

In order to allow IPTV users to choose from several broadcasted TV channels, multiple MPEG streams are multiplexed into one transport stream, referred to as an MPEG Transport Stream.

MPEG-Transport Stream (MPEG-TS) is a communications protocol for audio, video, and data which is specified in MPEG-2 Part 1. Its design goal is to allow multiplexing of digital video and audio and to synchronize the output. Transport stream further offers features for error correction for transmission over unreliable media, and is used in broadcast applications. It is contrasted with Program Stream, designed for more reliable media such as DVDs.

In order to transport the MPEG-TS over the internet, standards-based IPTV systems use UDP packets which are optionally wrapped into RTP. In addition, IP signaling protocols such as IGMP version 2, notably in the case of live TV, or RTSP, notably for Video on Demand applications, may be used. By way of example and in order to keep the description concise, the present invention is explained on the basis of the RTP protocol which will be briefly discussed in the following.

The Real-time Transport Protocol (or RTP) defines a standardized packet format for delivering audio and video over the Internet. It was developed by the Audio-Video Transport Working Group of the IETF and was originally designed as a multicast protocol, but has since been applied in many unicast applications as well. As RTP uses UDP instead of TCP, it is frequently used for applications which are less sensitive to packet loss, but typically very sensitive to delays. The services provided by RTP include:
- Payload-type identification - indication of what kind of content is being carried;
- Sequence numbering - allow to restore the packet sequence and to detect missing packets;
- Time stamping - allow synchronization and jitter calculations. RTP can be used to provide sequencing numbers and basic timing markers for a MPEG-2 Transport Stream, and thus allowing the detection of missing packets and of latency in the network.

The process of mapping MPEG-2 TS packets into RTP (i.e. UDP) packets is usually referred to as "wrapping" or "encapsulating". Typically, seven MPEG2-TS packets (7*188 bytes) are mapped into one IP / UDP packet of 1316 bytes. As explained above, an MPEG-2 TS contains several different elementary streams (video, possibly multiple audio, data and information describing the stream itself known as PSI (Program specific information)) multiplexed together. Hence a single UDP packet may comprise fragments or packets of different elementary streams. Even if it comprises only video, it may include fragments or packets from more than one video frame. This results from the fact that each frame is broken up by the encoder into a plurality of packets which are then multiplexed together into MPEG2-TS packets in an arbitrary manner.

In modem IPTV systems, some applications require processing of the video streams after the encoders in the headend and before the streams reach the STB.

These applications include, e.g., Fast Channel Change (FCC), Video Denting, and Advertisement Splicing.

Fast Channel Change (FCC) is a feature that allows end users to rapidly switch between TV channels, whereas Video Denting is a mechanism that can be used to reduce bandwidth in congested networks, by removing less important information (e.g. B-frames or audio data) from the Transport Stream. Advertisement Splicing is used to insert local adverts into a video stream, in order to select an advert which is most appealing to a region and if possible even a single end-user. These applications have in common that the transmitted UDP packets need to be analyzed in detail, in order to filter out the respective packet content, e.g. a next video channel, a B-frame or a splicing point for an advert, respectively. Because the UDP packets may comprise an arbitrary mixture of elementary streams, such operations are relatively complex and demand high memory and processing capacities.

The present invention addresses the above mentioned problems related to prior art IPTV systems, namely:
- High memory and processing requirements in conjunction with FCC;
- Complex implementation of Video Denting;
- Complex advertisement insertion, notably on local network level.

The present invention addresses the above problems by proposing a method, and a related apparatus, for wrapping the MPEG-2 TS packets into UDP packets in an intelligent manner. It is referred to in the following as the "intelligent wrapping step" or the "intelligent wrapper".

According to an aspect of the invention, packets from at least one data stream are encapsulated into transmission packets for IPTV data streaming. Such a data stream may be an MPEG video stream comprising several elementary streams such as video, possibly multiple audio streams and streams relating to additional information. The packets of a data stream are associated with a plurality of packet types. By way of example, in case of an MPEG video stream such packet types may be defined for Start of I-frame/GOP, additional payload of an I-frame, P-frames, B-frames, audio frames, data and others. It should be noted, that packet types may be defined in order to best suit the respective application. The disclosed method comprises the steps of receiving the packets from the at least one data stream and of sorting the packets according to their packet type. In contrary to prior art methods, the packets are not arbitrary wrapped into transmission packets, or according to their sequence number, but are sorted according to pre-defined packet types. In a next step, the packets are encapsulated into transmission packets such that each transmission packet only contains packets from a subset of the plurality of packet types. By way of example, such subset may combine the packet types of P-frames and B-frames or all non video related packet types.

According to another aspect of the invention, the method may be applied to a plurality of data streams, for example a plurality of MPEG video streams also referred to as Multiple Program Transport Streams (MPTS), wherein each of the data streams may comprise a plurality of elementary streams, e.g, for video, audio and data in case of MPEG. The packets of the data streams may be associated with a plurality of packet types, for example Start of I-frame/GOP, additional payload of an I-frame, P-frames, B-frames, audio frames, data and others in case of MPEG. The disclosed method allows multiple variants of encapsulating the data stream packets into transmission packets. By way of example, after encapsulation the transmission packets may only contain packets from a single program of the Transport Stream, i.e. from one of the plurality of data streams. This may be beneficial, e.g., for enabling a rapid switch between IPTV channels. In another example, the transmission packets may only contain packets from one elementary stream of a particular data stream. This may be beneficial, e.g, for enabling a rapid switch between different audio channels of a particular IPTV channel. In yet another example, the transmission packets may only contain packets from a particular elementary stream within a particular data stream, wherein all packets belong to one particular packet type, such as B-frames. This may be beneficial, e.g., for applications such as Video Denting as particular packet types can be rapidly identified, and in case of Video Denting discarded. Apart from the described combinations other combinations may be beneficial for particular applications and are part of the disclosed invention.

According to another aspect of the invention, the video streams are arranged or re-arranged in order to adjust the MPEG-2 packets in such a way that a single IP/UDP packet contains only a single type of MPEG-2 packet.

According to another aspect of the invention, the adjustment of the MPEG-2 packets ensures that an IP/UDP packet contains only packets from a single video frame. By way of example, a MPEG TS packet may only contain I-frame packets of a single I-frame, or B-frame packets of a single B-frame. Furthermore, it may be beneficial to regroup audio and data packets related to one particular I-frame into a joint MPEG TS packet. In other words, the payload data included in such MPEG TS packet may relate to one particular video frame.

According to another aspect of the invention, the arrangement of the MPEG-2 packets ensures that an IP/UDP packet contains only packets from one elementary stream, such as audio, video, data, PSI and others. Furthermore, each IP/UDP packet may only contain packets from one elementary stream which relates to a particular video frame. By way of example, an IP/UPD packet may only contain audio data related to one particular I frame.

In IPTV systems, multiple video streams are often multiplexed together into a single MPEG2-TS. Such streams are also referred to as Multiple Program Transport Streams (MPTS), in contrast to Single Program Transport Streams (SPTS). According to another aspect of the invention, the adjustment of the MPEG-2 TS ensures that an IP/UDP packet contains only packets from one single video stream. Consequently, the present invention allows the simple identification of a particular program, i.e. video stream, out of a MPTS.

It should be noted that the present invention is codec agnostic and can be applied to any codecs. MPEG-2 and RTP should therefore be seen as examples for a possible embodiment of a data stream and a transmission stream, respectively.

Consequently, according to another aspect of the invention, a multiplexed data stream, which comprises a plurality of data streams, each comprising packets from a plurality of elementary streams, is wrapped into transmission packets in such a way, that the said transmission packets only comprise packets from a subgroup of the plurality of elementary.streams from one of the data streams.

According to another aspect of the invention, the multiplexed data stream could also be wrapped in two steps. A first, basic wrapping step, encapsulates the multiplexed data stream into first transmission packets in an arbitrary manner, as known from the prior art. A second, intelligent wrapping step re-processes the first transmission packets in such a way that the resulting second transmission packets only comprise packets from a subset of the plurality of packet types.

According to an aspect of the invention, the size of the said subset could be smaller than the total number of packet types. The size of the subset can be selected to optimize the tradeoff between transmission overhead and processing complexity. According to an aspect of the invention, the size of the said subset is one. In other words, a transmission packet comprises packets of only one packet type.

According to another aspect of the invention, the header of a transmission packet provides information about its payload. Such information could be the type of elementary stream and/or packet types, e.g. an I-frame of a video stream. Furthermore, according to another aspect of the invention, the header of the transmission packet may provide information about the importance of its payload, thus allowing the implementation of quality of service mechanisms.

According to another aspect of the invention, the subgroup of elementary streams could also comprise packets from similar types of elementary streams from different data streams.

Another aspect of the invention is to provide processing of the data stream only in the headend in order to make downstream processing much lighter. These results in reduced downstream processing cost, which means that downstream processing may be pushed deeper into the network. By this, core bandwidth needs are reduced and scaling of the IPTV system is simplified thus enabling more personal advertisement splicing and local advert insertion. Preferably, the headend processing is combined with the encoders.

It should be noted that basically the above mentioned aspects of the invention may be arbitrarily combined. Furthermore, it should be noted that the disclosure of the invention also covers other claim combinations than the claim combinations which are explicitly given by the back references in the dependent claims, i.e., the claims may be basically combined in any order.

The advantages and features of the invention will become apparent from the description of preferred embodiments. The present invention is described in the following by referring to exemplary embodiments illustrated schematically in the accompanying figures, wherein Fig. 1 illustrates schematically the structure of a prior art IPTV system; Fig. 2 shows schematically the method of multiplexing multiple MPEG video streams into a MPEG Transport Stream; Fig. 3 shows schematically a prior art wrapping method; Fig. 4 illustrates schematically an intelligent wrapping step according to an embodiment of the invention; Fig. 5 illustrates schematically the structure of a IPTV system using an intelligent wrapper according to an embodiment o the invention.

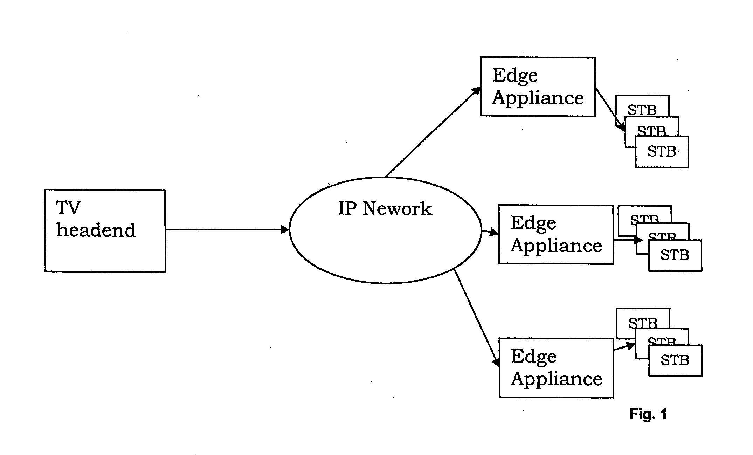

Fig. 1 shows a prior art IPTV system, comprising a TV headend, which gathers different video streams, multiplexes them into MPEG2 Transport Streams and uses a basic wrapping step in order to encapsulate the MPEG2-TS into IP/UDP packets. These UDP packets are then sent using the IP protocol to end users' STBs via edge appliances. The task of the edge appliance is to allow for applications such as FCC, Video Denting or Advertisement Insertion, which all require additional video processing. It should be noted, that the edge appliances may also be integrated within network equipment, such as routers and DSLAMs.

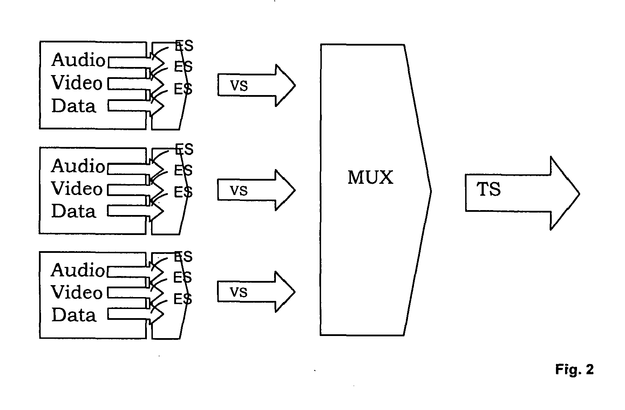

Fig. 2 depicts the multiplexing of a plurality of video streams (VS) into an MPEG2 - Transport Stream (TS). As an example, three video streams are shown, which are multiplexed into one Transport Stream, also referred to as a Multiple Program Transport Stream. Again as an example, each of the video streams comprises three elementary streams (ES) containing Audio, Video and Data streams, respectively. Each elementary stream may furthermore be made up of several types of packets, in other words, the packets of an elementary stream may be associated with a certain packet types. In case of a video elementary stream, such types may be the start of an I-frame/GOP, additional payload of an I-frame, P-frames, B-frames and others. It should be noted that for the purpose of this invention the terms video stream and elementary stream are not limited to the MPEG2 protocol, but can be applied to any encoding protocols, where a data stream regroups a plurality of elementary streams.

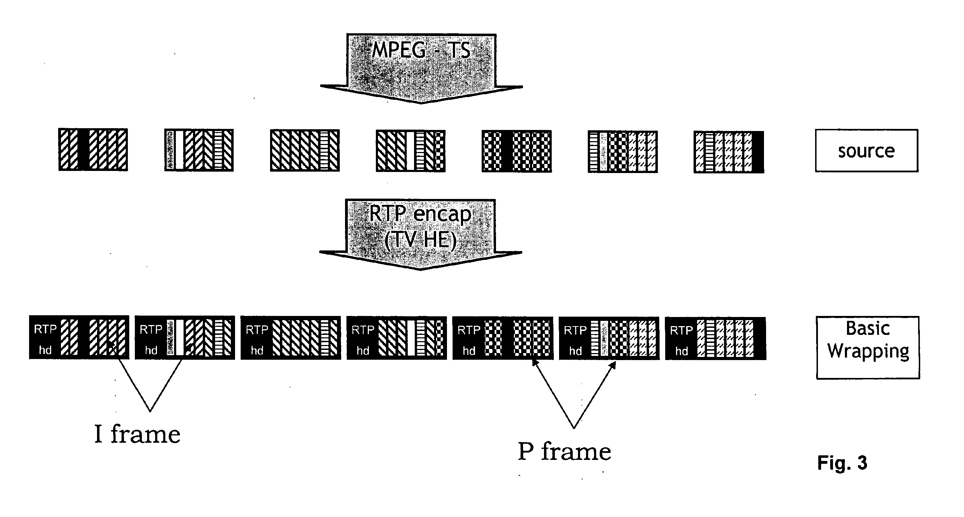

Fig. 3 shows the step of basic wrapping used in prior art methods. The incoming MPEG - TS is mapped into UDP transmission packets, in such a way that 7 MPEG-TS packets form one UDP transmission packet. As can be seen, each transmission packet may contain packets from different elementary streams possibly originating from different video streams. As an example, it can be seen from Fig. 3 that packets from an I-frame are spread over the first and the second RTP packets. In addition to the I-frame data, the second RTP packet also contains packets from other elementary streams, possibly from other video streams. This is indicated by the different hedging of the boxes, which represent the individual packets. As a result of multiple elementary streams within single RTP packets, heavy processing is required on the transmission packets, in order to enable applications such as FCC, Video Denting and Advertisement Splicing.

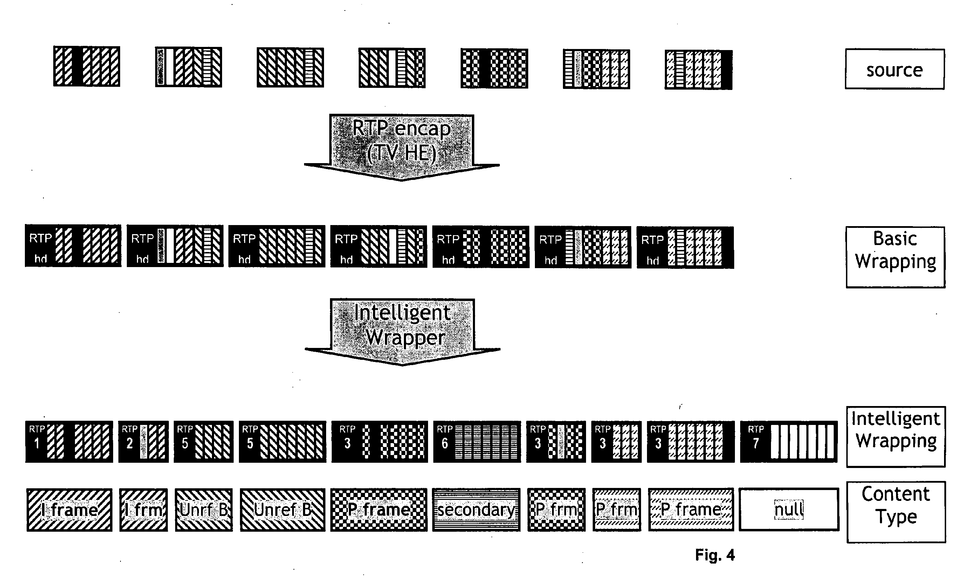

Fig. 4 shows, by way of example, the additional intelligent wrapping step proposed in the present invention. Using a basic wrapping step, the MPEG Transport Stream is encapsulated into first transmission packets which include an arbitrary mixture of elementary streams and packet types. In an intelligent wrapping step, the first transmission packets are remapped into second transmission packets, such that each one of the second transmission packets only contains packets from a subgroup of elementary streams. As an example, the third and forth packet shown in Fig. 4 now only contain packets from an unreferenced B frame. Fig. 4 also indicates that the encapsulated packet type can now easily be identified from the RTP header. By way of examples, numbers are shown in the RTP headers, e.g. "5" in the third packet, in order to indicate the packet type extension, identifying the type of payload, such as I-frame, B-frame, audio frame, etc. In the shown example, the numbers were assigned as follows: Start of an I-Frame / GOP (1), additional payload of I-Frames (2), P-Frames (3), B-Frames (4), Unreferenced B-Frames (5), Audio Frames (6), Nulls (7), Data (8), MPEG-2 PSI (9). Note, however, that the RTP packets might now vary in length, in order to assure that only packets from a subgroup of elementary streams are included. In cases, where variable packet length is objectionable, padding such as NULL MPEG-2 Transport packets, could be added to the MPEG2-TS packets, in order to create a constant bit-rate data stream.

It should be noted that, for reasons of conciseness, in Figures 3 and 4 the wrapping methods are explained on the basis of Single Program Transport Streams. Based on the details provided in this patent application, the application of the wrapping methods to Multiple Program Transport Streams is apparent to a person skilled in the art. By way of example, in order to ensure that transmission packets of an MPTS only contain packets which belong to one SPTS and to one single packet type, the intelligent wrapper needs to ensure that the sorting step is done accordingly. Packets will have to be sorted according to two criteria in parallel, i.e. packets need to belong to the same packet type and they need to belong to the same SPTS. In one embodiment, this could be done by first sorting the packets according to their SPTS affiliation and by then sorting them according to their packet type affiliation.

More generally, the first transmission packets are wrapped into second transmission packets, such that the second transmission packets only contain packets from a subgroup of elementary streams, the subgroup being smaller than the total number of elementary streams, e.g. including only one elementary stream.

It should be noted that the intelligent wrapper is shown here in a two step approach, which has the advantage that already existing video headend equipment can be used. Alternatively, the intelligent wrapping could also be implemented in a one step approach within the headend equipment, but directly wrapping the MPEG-TS packets according to the method described in the present invention. This would reduce the overall processing time required for the wrapping step.

As a result of the intelligent wrapping step, the RTP header of the UDP transmission packets may contain an identification of the payload type. This means that it is very easy to identify from the RTP header, information about the elementary stream such as Start of an I-Frame / GOP, Payload of I-Frames, P-Frames, B-Frames, Unreferenced B-Frames, Audio Frames, Nulls, Data and MPEG-2 PSI (Program Stream Information), etc. In addition, within the context of conditional access systems, by which access to specific video streams is restricted to subscribed users, relevant information, such as Entitlement Management Messages (EMM) and Encryption Control Messages (ECM), can be easily identified. This information is typically used to signal which services, e.g. a broadcast channel, a user is authorised to view. The user needs to have received an EMM for a given service before the users' smart card or similar secure decoder can decrypt the corresponding ECMs and hence recover the keys for descrambling the video itself. For added security, the keys are changed frequently, e.g. every 5 minutes or even more frequently. ECMs and EMMs are defined in the MPEG-2 standard.

Furthermore, the RTP header may be used to efficiently signal the importance of each packet. This feature can be used beneficially for traffic management purposes, as less importance data packets could be dropped, in order to avoid network congestion.

Finally, it needs to be noted that due to that fact that MPEG-2 packets might have been moved around with respect to the initial MPEG-TS, there might be a need to change the MPEG-TS timing markers including the Program Reference Clock (PCR), the Presentation Time Stamp (PTS) and the DTS audio timer.

As stated above, the present invention is codec agnostic, both with respect to the video protocol and the IP transmission protocol used. It has been explained in the present patent application based on the usage of MPEG-2 as video codec and RTP as transmission protocol, but may be used for other codecs known to the person skilled in the art.

In an embodiment, the effects of the intelligent wrapping of the stream are twofold: Firstly, it simplifies the identification of packet types by wrapping the MPEG-2 packets. Secondly it adjusts the MPEG-2 packets in such a manner, so that a single IP/UDP packet contains only a single type of MPEG-2 packet. Further, the adjustment ensures that the IP/UDP packet only contains a single video frame. The advantage of the above steps is to ensure a quick identification of the packet type. Hence it is quick to identify a key frame for FCC or for identifying which packets may be dropped during video denting. The stream may be further processed to make the advert splicing point easy to handle. This may not only require wrapping but also some re-encoding of the content.

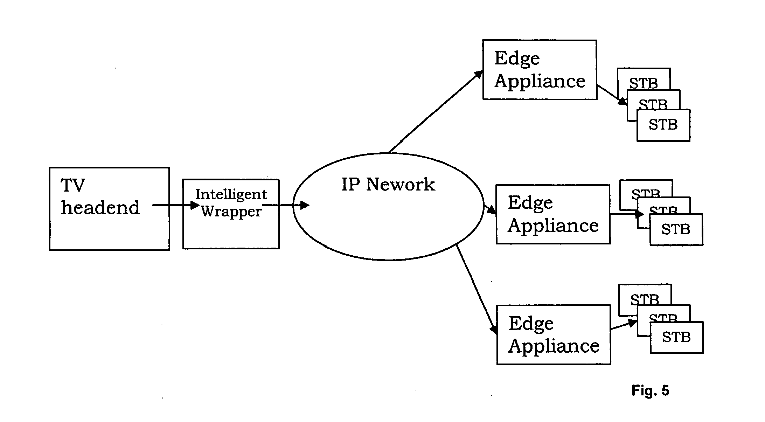

Fig. 5 shows an IPTV system using the intelligent wrapper device described in the present invention. In Fig.5 the intelligent wrapper has been placed directly at the output of the TV headend, but it could also be placed at different places within the IPTV distribution network, for example, at regional levels. This way, first transmission packets would be sent from the TV headend over the Internet to the intelligent wrapper placed at regional level. This could be advantageous from a bandwidth point of view, as the intelligent wrapper presented here may cause a small increase in the length of the video stream.

It should also be noted that the intelligent wrapper device may be used to insert program related information, such as PSI and ECMs, into a MPEG2-TS, in order to simplify processing in the STBs and the program decoders.

As mentioned above, certain applications, such as Fast Channel Change, Video Denting and Advertisement Splicing require re-processing, which - in prior art systems - can be rather extensive and complex. Specifically, deep packet inspection (DPI) is required, which requires heavy extensive data processing.

Fast Channel Change allows end users to rapidly change between TV channels. As explained above, MPEG-2, as well as many other modem video codecs, collects a set of video frames into a group called a Group of Pictures (GOP). A GOP starts with a reference frame (e.g. I-Frame in MPEG2 video ISO 13818 part 2). Other frames in the GOP are predicted from the reference frame. A GOP can be of different lengths from 0.5 seconds up to 10-15 seconds. There is an issue when tuning into a video stream (e.g. during channel change), as the video data cannot start to be decoded until the reference frame has been received. This imposes a delay before the user starts to see any video. Thus a small buffer of one to two GOP buffers in a FCC appliance, also referred to as edge appliance in the present invention, is held in order to speed up channel change times. When an end-user switches to a new channel, then the most recent reference frame is streamed from the buffer. This allows the receiver to immediately start decoding the video and to allow for a fast switchover to another channel. However, in order to scale and serve a large number of clients, this approach needs to be distributed with many FCC appliances or edge appliances.

Therefore, today Fast Channel Change is implemented by placing a high number of edge appliances close to the end users' STBs. A video stream is sent via multicast to the end-users. Each edge appliance will cache a small amount of the video stream. When a user requests a channel change, this request is directed to one of the edge appliances which then deliver a unicast stream to the STB starting at the I-Frame. This ensures that the decoding starts as soon as possible and that channel switchover times are low. However, there are at least two problems with prior art IPTV systems. One is the high amount of processing needed in the edge appliances in order to find the start of I-Frames, which, due to the above mentioned MPEG2-TS basic packet mapping, may be partially or completely buried within an RTP packet. Secondly, in order to be able to rejoin the multicast stream and hence reduce the load on the network downstream of the edge appliances, it is necessary to unicast the video stream faster than the video stream encoding rate, in order to "catch up" with the multicast video stream. Both these issues, i.e. I-frame identification and bursting of the unicast video stream, lead to high processing demand on the edge appliances and the STBs and consequently to high infrastructure costs.

Using the intelligent wrapper of the present invention, these problems are solved, as, firstly, I-frames can be easily identified from the headers of the RTP packets and as, secondly, bursting can be easily bypassed by using Video Denting as explained below.

A second application requiring additional video processing is Video Denting. As highlighted above, in a video stream, not all parts are equally important. For example, in an MPEG-2 video stream, B-Frames may be dropped without significant impact on the video quality. The effect of dropping less useful video information is to reduce the bandwidth, which is useful when the network is congested or if an application requires to quickly fill up the input buffers of an end users STB, in order to avoid service interruption.

Video Denting could also be used in order to support Fast Channel Change and reduce the memory and processing requirements of the edge appliances and the STBs. Immediately after a channel change, certain items could be dropped, as they are not so important for the service quality. These items include audio, B-Frames, Nulls etc. However, the prior art encapsulates different types of information of a MPEG-2 TS together into one RTP packet, making it difficult to discard only those frames that are of less importance. While the identification and discarding steps could be done theoretically within the edge appliances, this would require significant processing resources, as the payload of the RTP packets would have to be analyzed in detail and partial RTP packets would have to be discarded.

The intelligent wrapper presented in the present patent application solves this problem, as the type of payload carried in an RTP packet can be easily identified from its header. If required, packets with less important payload may then easily be discarded.

A third application requiring additional video processing is advertisement splicing or insertion. The desire of an advertiser is to ensure that his adverts are delivered to the end-users who are most likely to be interested in their product. Today, much of the broadcast TV market is financed by advertisements, and also for IPTV advertisement is of major importance. Moreover, due to the ability to combine broadcasting, multicasting and unicasting techniques, IPTV allows to better adapt the advert to the individual user. For example, some adverts may be inserted for national broadcast, but they may also be replaced locally by some more relevant advert. By making advertisement splicing more local, the adverts can be made more relevant to the locality and demographics. The ultimate goal of the advertisement industry is to deliver adverts matching each individual's profile. Prior art systems usually involve Deep Packet Inspection and significant amounts of processing to find the splice point and to insert the new advertisement stream. This is to ensure that the MPEG-2 stream resulting from the advert insertion will not cause problems in the downstream decoders. Notably the video decoding buffers in the STBs are often very sensitive to any change of the MPEG-2 TS. Consequently, a prior art method for advert insertion actually involves the step of completely re-encoding the video streams. Such a step requires costly network resources, which limits the prior art method to usage in a few number of locations. As such, prior art methods do not enable local advert insertion down to the central offices or possibly even to the DSLAMs of the telecommunication provider.

Using the method proposed in the present invention, particular video streams and splicing points can be easily identified by analyzing the headers of the RTP packets. Consequently, new advertisement video streams can be easily inserted. Furthermore, the video streams do not need to be re-encoded, as the inserted video stream will not impact the parameters of the overall MPEG-TS.

As has become apparent from the explanations above, the solution has a number of advantages over the prior art methods. The intelligent wrapping step enables the edge appliances or other network elements to quickly and easily identify different video and audio types from the transmission packet headers. Furthermore, the processing effort to manage video streams is minimized. Overall, this complexity reduction enables video and audio stream processing for applications such as FCC, Video Denting and Local Advert Insertion to be distributed to the central offices and even to the DSLAMs of network providers. Due to the fact that in presented embodiments of the invention, the transmission packets are valid RTP/ IP packets, there is no need for any special processing on the network side.

The present invention is not limited to the disclosed exemplary applications. Other applications may benefit from the invention as well. This written description uses examples to disclose the invention, including the best mode, and also to enable any person skilled in the art to make and use the invention. While the invention has been described in terms of various specific embodiments, those skilled in the art will recognise that the invention can be practiced with modification within the spirit and scope of the claims. Especially, mutually non-exclusive features of the embodiments described above may be combined with each other. The patentable scope of the invention is defined by the claims, and may include other examples that occur to those skilled in the art.

## Claims

1. A method for encapsulating packets from at least one data stream into transmission packets for IPTV data streaming, wherein the packets are associated with a plurality of packet types, and wherein the method comprises the steps:
- receiving packets from the at least one data stream;
- sorting the packets according to their packet type; and
- encapsulating the packets into transmission packets such that each transmission packet only contains packets associated with a predetermined subset of the plurality of packet types.

2. The method according to claim 1, preceded by a basic wrapping step, wherein the packets from the at least one data stream are encapsulated sequentially into first transmission packets and wherein the packets of the first transmission packets are then re-arranged to form the transmission packets according to claim 1.

3. The method according to claim 1, wherein a transmission packet only contains packets from one packet type.

4. The method according to claim 1, wherein the at least one data stream is an MPEG video stream, and wherein the packet types relate to MPEG frame types.

5. The method according to claim 1, wherein the at least one data stream comprises a plurality of elementary streams and wherein the subset of packet types is uniquely associated with one of the elementary streams.

6. The method according to claim 1, wherein the at least one data stream is a video stream and wherein each transmission packet only contains payload data relating to one single video frame.

7. The method according to claim 1, wherein a header of a transmission packet includes information for identifying the set of packet types of the packets encapsulated within.

8. The method according to claim 1, wherein a header of the transmission packet includes information for identifying the importance of the set of packet types of the packets encapsulated within.

9. The method according to claim 1, wherein a plurality of data streams are encapsulated, the data streams corresponding to a multiple program transport stream, each data stream carrying data of one single program transport stream; and wherein the method comprises the additional step of - sorting the packets according to their data stream affiliation such that each transmission packet only contains packets from a single program transport stream.

10. The method according to claim 1, wherein the at least one data stream comprises conditional access information.

11. An apparatus for IPTV streaming comprising means for wrapping packets from at least one data stream into transmission packets, wherein the packets are associated with a plurality of packet types, and wherein the apparatus comprises
- means for receiving packets from the at least one data stream;
- means for sorting the packets according to their packet type; and
- means for encapsulating the packets into transmission packets such that each transmission packet only contains packets from a subset of the plurality of packet types.

## Amended claims

### Amended claims in accordance with Rule 137(2) EPC.

**1.** A method for encapsulating MPEG-TS packets of at least one data stream into transmission packets for IPTV data streaming, wherein the MPEG-TS packets are associated with a plurality of packet types, and wherein the method comprises the steps:
- receiving MPEG-TS packets from the at least one data stream;
- re-arranging the MPEG-TS packets according to their packet type and not according to their sequence number;
- encapsulating the MPEG-TS packets into transmission packets such that each transmission packet only contains MPEG-TS packets associated with a predetermined subset of the plurality of packet types; and
- changing the MPEG-TS timing markers including the Program Reference Clock and the Presentation Time Stamp according to the re-arrangement of the MPEG-TS packets.

**2.** The method according to claim 1, preceded by a basic wrapping step, wherein the MPEG-TS packets from the at least one data stream are encapsulated sequentially into first transmission packets and wherein the MPEG-TS packets of the first transmission packets are then re-arranged to form the transmission packets according to claim 1.

**3.** The method according to claim 1, wherein a transmission packet only contains MPEG-TS packets from one packet type.

**4.** The method according to claim 1, wherein the packet types relate to MPEG frame types.

**5.** The method according to claim 1, wherein the at least one data stream comprises a plurality of elementary streams and wherein the subset of packet types is uniquely associated with one of the elementary streams.

**6.** The method according to claim 1, wherein the at least one data stream is a video stream and wherein each transmission packet only contains payload data relating to one single video frame.

**7.** The method according to claim 1, wherein a header of a transmission packet includes information for identifying the set of packet types of the MPEG-TS packets encapsulated within.

**8.** The method according to claim 1, wherein a header of the transmission packet includes information for identifying the importance of the set of packet types of the MPEG-TS packets encapsulated within, wherein the information which identifies the importance allows the implementation of quality of service mechanisms.

**9.** The method according to claim 1, wherein a plurality of data streams are encapsulated, the data streams corresponding to a multiple program transport stream, each data stream carrying data of one single program transport stream; and
wherein the method comprises the additional step of
- re-arranging the MPEG-TS packets according to their data stream affiliation
such that each transmission packet only contains MPEG-TS packets from a single program transport stream.

**10.** The method according to claim 1, wherein the at least one data stream comprises conditional access information.

**11.** An apparatus for IPTV streaming comprising means for wrapping MPEG-TS packets of at least one data stream into transmission packets, wherein the MPEG-TS packets are associated with a plurality of packet types, and wherein the apparatus comprises
- means for receiving MPEG-TS packets from the at least one data stream;
- means for re-arranging the MPEG-TS packets according to their packet type and not according to their sequence number;
- means for encapsulating the MPEG-TS packets into transmission packets such that each transmission packet only contains MPEG-TS packets from a subset of the plurality of packet types; and
- means for changing the MPEG-TS timing markers including the Program Reference Clock and the Presentation Time Stamp according to the re-arrangement of the MPEG-TS packets.
